# FASCICULE DE BREVET EUROPEEN

(11) **EP 0 951 388 B1**
(45) Date de publication et mention de la délivrance du brevet: **24.06.2009**
(21) Numéro de dépôt: 98941407.3
(22) Date de dépôt: 22.07.1998
(51) Int. Cl.: B32B 17/10, C03C 17/30, C03C 27/12

(54) **VITRAGE ANTI-FEU**
FEUERFESTE VERGLASUNG
FIREPROOF GLAZING

(30) Priorité: 22.07.1997 DE 19731416
(43) Date de publication de la demande: 27.10.1999
(73) Titulaire: Vetrotech Saint Gobain (International) AG, 6318 Walchwill (CH)
(72) Inventeur: GELDERIE, Udo, D-52222 Stolberg (DE); FROMMELT, Simon, D-42781 Haan (DE); GROTEKLAES-BRÖRING, Michael, D-52064 Aachen (DE); MICHELS, Dirk, D-41239 Mönchengladbach (DE)
(74) Mandataire: Cardin, Elise
(86) Numéro de dépôt international: PCT/EP1998/004927
(87) Numéro de publication internationale: WO 1999/004970

(56) Documents cités:
- EP-A- 0 001 531
- EP-A- 0 549 335
- EP-A- 0 606 174
- WO-A-94/04355

## Description

La présente invention concerne un vitrage de protection contre l'incendie (anti-feu), comportant au moins deux feuilles de verre entre lesquelles est disposée une couche transparente faite d'un polysilicate alcalin hydraté, durci, ayant un rapport SiO₂:M₂O d'au moins 3:1 (où M désigne au moins un métal alcalin) et une teneur en eau de 25 à 60% en poids, et dans lequel au moins une feuille de verre est pourvue, sur sa surface qui est en contact avec la couche de polysilicate, d'une couche de primaire influençant l'adhérence.

Des vitrages anti-feu de cette sorte sont connus de par le document WO 94/04355. Dans ce cas, la couche transparente consiste de préférence en polysilicate alcalin hydraté ayant un rapport SiO₂:M₂O supérieur à 4:1 (où M désigne au moins un métal alcalin) et chaque feuille de verre est pourvue d'une couche de primaire formée d'un silane organofonctionnel. La couche de polysilicate mousse en cas d'incendie sous l'action de la chaleur avec l'évaporation de l'eau, elle devient imperméable au rayonnement thermique, et forme durant une période déterminée une protection efficace contre un passage indésirable de la chaleur. Dans ces vitrages anti-feu connus, les silanes organofonctionnels doivent influencer l'adhérence dans le sens de l'amélioration de l'adhérence de la couche de polysilicate sur les feuilles de verre dans toutes conditions, et ils sont choisis dans cette perspective.

Dans WO 94/04355, une bonne adhérence entre la couche de polysilicate et les surfaces de verre est déclarée nécessaire, et doit être garantie pour toute la durée de vie du vitrage anti-feu, car les décollements de la couche de polysilicate sont visibles sous forme de défauts de qualité de grande superficie.

On connaît, de par les documents EP 0 001 531 B1 et EP 0 590 978 A1, des vitrages anti-feu dans lesquels la couche anti-feu disposée entre deux feuilles de verre est formée d'un hydrogel salin contenant un agent organique formant un gel, par exemple à base d'acrylamide et/ou de méthylolacrylamide. Dans de tels verres anti-feu également, les faces des feuilles de verre qui sont en contact avec l'hydrogel sont traitées avec une substance qui améliore l'adhérence. Dans ce cas, on utilise exclusivement, comme substances améliorant l'adhérence, des substances organiques hydrophiles à base de silanes, de titanates ou de zirconates, qui réagissent d'une part avec la surface du verre et d'autre part avec les doubles ou triples liaisons carbone-carbone du polymère formant le gel.

Lors d'essais de tenue au feu réalisés avec des verres anti-feu de la structure citée ci-dessus, c'est-à-dire comportant une couche intermédiaire formée d'un polysilicate alcalin, il s'avère que se développent fréquemment, après un temps déterminé, des endroits délimités localement, dans lesquels l'action protectrice de la couche moussante de polysilicate diminue, de sorte que la feuille de verre du vitrage anti-feu opposée au feu dépasse en ces endroits la température autorisée. La formation de ces défauts qui s'échauffent de manière excessive (points chauds), fait que des parties de la mousse de polysilicate s'échappent de la couche et tombent dans le four d'incendie.

Le but de l'invention est la mise au point d'un vitrage anti-feu de structure citée dans le préambule, amélioré afin de diminuer l'apparition de ces défauts qui se forment localement, et d'ainsi allonger la durée de résistance au feu du vitrage anti-feu.

Ce but est atteint suivant l'invention par le fait que au moins une feuille de verre, à savoir celle qui sera exposée au feu, est pourvue sur sa surface qui est en contact avec la couche de polysilicate, d'une couche de primaire dont l'adhérence diminue aux températures de l'essai de tenue au feu et que la couche de primaire est formée d'une matière hydrophobe comprenant au moins une silane organofonctionnel ou au moins un acide gras ou dérivé d'acide gras, ou d'une matière dont le point de ramolissement est inférieur ou égal à ladite température de l'essai de tenue au feu, de l'ordre de 60 à 120°C.

L'invention s'appuie en effet sur la découverte que avec les vitrages de l'art antérieur, les défauts apparaissent, lors des essais de tenue au feu, par te fait que la feuille de verre qui est exposée au feu se brise, lorsque l'on dépasse un gradient de température déterminé entre la surface de la feuille de verre et le bord de la feuille de verre enchâsse, en raison des efforts de tension qui se forment dans la zone du bord, et que les fragments de verre qui tombent de la feuille entraînent avec eux des morceaux de la couche anti-feu en polysilicate, parce que l'adhérence du matériau en polysilicate sur le verre est plus grande que les forces de cohésion à l'intérieur du matériau en polysilicate.

L'invention prévoit pour cette raison de diminuer l'adhérence du matériau de polysilicate au verre aux températures de l'essai de tenue au feu, de telle sorte que les forces de cohésion dans le matériau en polysilicate l'emportent et que les fragments de verre se séparent du matériau en polysilicate, sans que l'intégrité de la couche anti-feu ne soit perdue.

Selon la présente invention, le terme couche de primaire sous-entend, comme c'est l'habitude dans le métier des vitrages anti-feu, que l'adhérence entre le verre traité par le primaire et le polysilicate soit assez élevée pour éviter un décollement de la couche de polysilicate de la surface du verre, aux températures d'utilisation normales et durant des longues périodes, notamment au stockage.

L'expression "aux températures de l'essai de tenue au feu " s'entend donc comme désignant les températures rencontrées par la feuille de verre exposée au feu (ou feuille intérieure). En effet, il ne convient pas que la masse anti-feu se détache de la feuille extérieure qui doit assurer la protection. Au contraire selon l'invention, durant l'essai de tenue au feu, la feuille opposée au feu (ou feuille extérieure) reste plus froide que la feuille intérieure de sorte que l'adhérence à la masse anti-feu n'est pas affectée. Pour fixer les idées, on peut dire que des matières intéressantes pour l'invention voient leur adhérence à la masse de polysilicate réduite à des températures supérieures ou égales à 90°C environ.

Avantageusement, chacune des feuilles de verre qui constituent le vitrage est pourvue, sur sa surface en contact avec la masse de polysilicate, de ladite couche de primaire. La structure symétrique du produit facilite la pose du vitrage.

Dans le premier mode de réalisation de l'invention, le but voulu est atteint par l'utilisation d'une couche de primaire formée d'une matière hydrophobe.

Selon une première variante, cette couche de primaire est formée à partir d'une composition comprenant au moins un silane organofonctionnel qui a un certain effet hydrophobe, Les fluorosilanes, les alcoylsilanes, les phénylsilanes et les silicones font particulièrement partie de ces silanes qui influencent l'adhérence de façon variable selon la température, c'est-à-dire qui ont dans le cas d'un essai de tenue au feu un effet de diminution de l'adhérence. Alors que, aux températures normales d'utilisation et durant de longues périodes, aucune séparation entre la surface du verre et le matériau en polysilicate n'est constatée avec de tels silanes, ils manifestent leur effet de diminution de l'adhérence à des températures où l'eau contenue dans le polysilicate s'évapore. Les silanes hydrophobes subissent certes également une réaction chimique au niveau de l'atome de silicium avec la surface du verre, mais la partie restante de la molécule, qui consiste généralement en une chaîne alcoyle fluorée, une chaîne alcoyle aliphatique ou une chaîne siloxane, reste non réactive avec la masse de polysilicate et provoque la réduction de l'adhérence en cas d'incendie.

Les silanes qui conviennent au but suivant l'invention sont par exemple les silanes suivants :
- les fluoroalcoylsilanes, les perfluoroalcoylsilanes,
- les fluoroalcoyltrichlorosilanes, les perfluoroalcoyltrichlorosilanes,
- les fluoroalcoylalcoxysilanes, les perfluoroalcoylalcoxysilanes,
- les éthers silyliques fluoroaliphatiques,
- les alcoylsilanes et phénylsilanes éventuellement substitués, comme un alcoyl-trialcoxysilane, notamment alcoyl-triméthoxysilane ou alcoyltriéthoxysilane, un alcoyl-trichlorosilane, un phényl-trialcoxysilane,
- les silicones comme les polydiméthylsiloxanes, les polydiméthylsiloxanes terminés par des éthoxyles et les polydiméthylsiloxanes terminés par des méthoxyles:

Dans la liste qui précède " alcoyle " désigne un groupement hydrocarboné pouvant comprendre par exemple de 3 à 10 atomes de carbone, et " alcoxy " désigne un groupement éther pouvant comprendre par exemple de 1 à 4 atomes de carbone, notamment des groupes méthoxy ou éthoxy.

Selon une deuxième variante, qui peut d'ailleurs être associée à la première, la couche de primaire est formée à partir d'une composition comprenant au moins un acide gras ou un dérivé d'acide gras.

Par acide gras, on entend un acide carboxylique à longue chaîne, c'est-à-dire dont la chaîne carbonée, saturée ou insaturée, peut comprendre par exemple de 8 à 26 atomes de carbone, notamment de 10 à 24, de préférence de 12 à 20. Les acides gras utiles selon l'invention peuvent être d'origine naturelle ou synthétique. Ils peuvent répondre notamment aux formules suivantes : CₙH₂ₙO₂ ou CₙH₍₂ₙ₋₂₎O₂, où n = 8 à 26, de préférence de 14 à 20, comme par exemple l'acide stéarique ou l'acide palmitique.

Par dérivé d'acide gras, on entend tout composé organique formé à partir d'un acide gras tel que défini ci-dessus et qui renferme ladite longue chaîne carbonée par exemple de 8 à 26 atomes de carbone. En tant que dérivé particulièrement préféré, on peut mentionner les esters d'acides gras, dérivés d'alcools à chaînes longues ou courtes, saturées ou insaturées.

Bien que ne possédant pas de groupe réactif capable de réagir chimiquement avec la surface du verre (par opposition à l'atome de silicium d'un silane), ces composés se révèlent avoir une très bonne rémanence sur la surface du verre et sont aptes à former une couche de primaire répondant aux besoins de l'invention.

Les acides gras peuvent être appliqués de toute manière pour former la couche de primaire sur la feuille de verre. De préférence, on forme une couche fine d'acide gras ou de dérivé d'acide gars à partir d'une solution dans un solvant approprié, par exemple éthanol ou isopropanol, par aspersion, par enduction au rouleau ou par chiffonage manuel.

Dans le deuxième mode de réalisation de l'invention, qui peut être combinée à la première forme de réalisation, la couche de primaire est formée d'une matière dont le point de ramollissement est atteint ou dépassé lors de l'essai de tenue au feu. Cela signifie que le point de ramollissement de la matière est inférieur ou égal à ladite température de l'essai de tenue au feu.

Une telle couche de primaire répond aux besoins de l'invention par le fait que, lorsque la feuille de verre exposée au feu se brise en morceaux, la couche de primaire est ramollie, éventuellement fondue, et procure une adhérence très restreinte de la masse anti-feu sur la feuille de verre et donc offre une très faible résistance à l'arrachement des morceaux de verre. Les forces de cohésion dans le matériau en polysilicate l'emportent sur l'adhérence au verre et les fragments de la feuille de verre exposée au feu se séparent du matériau en polysilicate, sans que l'intégrité de la couche anti-feu ne soit perdue.

De telles matières ont un point de ramollissement relativement faible, de l'ordre de 60 à 120°C. Toutefois, on peut préférer des matières dont le point de ramollissement n'est pas trop faible, par exemple de l'ordre d'au moins 90 °C, pour pouvoir supporter l'échauffement par insolation ou un traitement thermique préalable à la mise en place du verre, ou le cas échéant un durcissement à chaud de la masse de polysilicate anti-feu.

Comme exemples de matières adaptées, on peut citer notamment des cires, aussi bien végétales, animales, ou minérales, naturelles ou modifiées chimiquement, ou des cires synthétiques.

Les cires, naturelles ou synthétiques, sont caractérisées par un point de ramollissement ou de fusion relativement bas et par des propriétés hydrophobes, dues à la présence de constituants organiques à longues chaîne carbonée. A cet égard, on remarquera qu'elles permettent d'atteindre le but visé par l'invention par la combinaison de deux propriétés, d'une part par un effet d'amollissement à haute température, mais aussi par un effet hydrophobe comme dans la première forme de réalisation.

Pour une description complète des différentes familles de cires, on pourra se référer à l'Encyclopédie Kirk-Othmer, Volume 22, pages 156-173.

Des exemples de cires utilisables selon l'invention sont les suivants :
* cires naturelles
   - végétales : Candelilla, Carnauba, cire du Japon, cire d'alfa, cérine, cire de cannes, de ricin, d'ouricury, de montagne
   - animales : cire d'abeilles, gomme-laque, spermaceti, lanoline
   - minérales : cérésine, ozokérite (cire fossile)
   - dérivées de pétrole : petrolatum, paraffine, cire microcristalline
* cires modifiées chimiquement : cire de montagne estérifiée, cire de jojoba hydrogénée
* cires synthétiques : polyoléfines, polyéthylèneglycols

Les cires peuvent être appliquées sur la feuille de verre pour former la couche de primaire, à partir d'une solution dans un solvant approprié, la couche résultant après évaporation du solvant pouvant être polie sous une légère pression pour devenir parfaitement transparente. Mieux encore, elles peuvent être déposées sur la feuille de verre directement par chiffonage. L'excès de matière peut ensuite être éliminé à sec au chiffon. A cet égard, des cires tout particulièrement appropriées sont par exemple les cires de paraffine ou de polyoléfine à chaîne en C₂₀ à C₃₀ de préférence.

Comme autres exemples de matières adaptées à cette deuxième forme de réalisation, on peut citer des laques à base de matière organique thermoplastique. Pour la présente application, les laques devraient être résistantes au milieu alcalin de la masse anti-feu à base de polysilicate hydraté, et avoir un point de ramollissement ou de fusion adapté pour permettre la délamination du verre aux températures d'essais de tenue au feu.

De préférence leur point de ramollissement/fusion est de l'ordre de 90 à 120 °C, avantageusement de l'ordre de 100 °C.

On préfère particulièrement des laques de type acrylique, à base de dispersion d'acrylates. Les propriétés de résistance en milieu alcalin et de ramollissement désirées peuvent être ajustées en fonction des besoins, notamment en jouant sur la nature et la quantité des monomères (ester d'acide acrylique et autres comonomères). Sont tout particulièrement appropriées à l'invention des dispersions d'acrylate pur, dans lesquelles les matières dispersées ont une masse moléculaire de l'ordre de 50.000 à 150.000 g/mol.

Entre autres caractéristique avantageuses pour l'invention, les laques présentent de préférence une taille des particules entre environ 0,01 µm et 5 µm, de préférence de l'ordre d'environ 0,1 µm, avec une température de formation de film ou de pellicule (MFT) de l'ordre de 0 à 25 °C, de préférence entre 3 et 17 °C.

Les dispersions sont avantageusement exemptes de plastifiant. En vue de la technique d'application envisagée, les propriétés des dispersions peuvent éventuellement être optimisées au moyen d'autres additifs correspondants. Ainsi, les dispersions peuvent être adaptées pour appliquer la laque sur la feuille de verre par aspersion ou pulvérisation, ou par enduction au rouleau. On peut ajouter des additifs tels que des polydiméthylsiloxanes modifiés pour régler les propriétés mouillantes et nivelantes de la dispersion, ou des agents anti-mousse ou promoteurs de la formation de film tels que des polymères tensioactifs.

Les laques ainsi appliquées forment après séchage une couche de primaire transparente, qui a avantageusement une épaisseur de l'ordre de 5 µm à 100 µm, de préférence de l'ordre de 10 µm à 30 µm.

D'autres caractéristiques et avantages de l'invention ressortiront de la description détaillée des exemples suivants, en regard d'un exemple comparatif de vitrage anti-feu suivant l'état de la technique.

### EXEMPLE COMPARATIF.-

On fabrique un vitrage anti-feu ayant les dimensions de surface 1,33 x 1,13 m², à partir de deux feuilles de verre, épaisses chacune de 5 mm, en verre flotté trempé, et d'une couche intermédiaire de 6 mm d'épaisseur de polysilicate de K et de Li ayant un rapport K:Li de 8,5:1,5 et un rapport molaire SiO₂:(K₂O+Li₂O) de 5:1. Pour fabriquer le polysilicate, on prépare un mélange d'une dispersion d'acide silicique à 30% dans l'eau et des oxydes alcalins, et le mélange est introduit dans l'espace entre les deux feuilles de verre, maintenues à distance par un cadre d'entretoisement et un collage approprié, et durci à température ambiante. La teneur en eau du polysilicate durci est de 51,2% en poids.

Avant l'assemblage des feuilles de verre, la surface de chacune des deux feuilles de verre tournée vers l'intérieur est traitée avec un silane promoteur d'adhérence, en l'occurrence du glycidoxypropyltriéthoxysilane.

Le vitrage anti-feu ainsi fabriqué est ensuite soumis à un test de tenue au feu, correspondant aux normes DIN 4102 ou ISO/DIS 834-1, en l'installant avec un châssis courant en acier avec un enchâssement de 20 mm dans un four d'incendie et en l'exposant à la flamme suivant la courbe standard des températures (CST).

Déjà après une courte période, la feuille de verre tournée vers le feu se sépare de la masse de matériau anti-feu en polysilicate et arrache des morceaux de petite et grande étendue de la masse du matériau anti-feu de la couche anti-feu. Cette feuille de verre éclate après 5 minutes. Les fragments de verre tombent dans le four avec les fragments de matériau anti-feu qui y adhèrent. Aux endroits où le matériau anti-feu tombé manque, on constate, après un court laps de temps, un dépassement de la température maximale autorisée de 190°C de la surface de la feuille de verre extérieure. L'expérience doit être interrompue après 15 minutes. Le temps de résistance envisagé de 30 minutes n'est pas atteint.

### EXEMPLE 1 SELON L'INVENTION

On fabrique un vitrage anti-feu de la même manière que décrit dans l'exemple comparatif, avec l'unique exception que les surfaces qui sont en contact avec la couche de polysilicate sont traitées avec un silane hydrophobe du groupe des perfluoroalcoylsilanes. La tension superficielle du verre est ainsi considérablement abaissée. Ainsi, par exemple, l'angle de mouillage de gouttes d'eau a, après le traitement par le silane, une valeur d'environ 90°, tandis que l'angle de mouillage avant le traitement est d'environ 40°.

Ce vitrage anti-feu est placé dans le four d'incendie dans les mêmes conditions, et l'essai de tenue au feu est réalisé comme dans l'exemple comparatif. Peu de temps après le début de l'essai de tenue au feu, la feuille de verre tournée vers le feu se sépare également de la masse de matériau anti-feu, mais dans ce cas elle se sépare complètement, de sorte que rien du matériau anti-feu ne reste collé à la feuille de verre. Lorsque, après 5 minutes, cette feuille de verre éclate et que les fragments tombent dans le four, aucun morceau du matériau anti-feu n'est entraîné dans le four; au contraire, toute la couche de polysilicate est maintenue intacte sur toute sa surface comme bouclier (écran) de protection contre l'incendie. On ne constate pas de défauts avec des températures élevées non autorisées sur la face extérieure de la feuille de verre opposée au four d'incendie. Le temps de résistance désiré de 30 minutes est atteint, et l'essai de tenue au feu est interrompu après 40 minutes.

On obtient d'aussi bons résultats dans des essais correspondants avec un traitement des surfaces de verre avec des alcoylsilanes, des fluorochlorosilanes et des silicones.

### EXEMPLE 2 SELON L'INVENTION

On fabrique un vitrage anti-feu ayant les dimensions de surface 1,24 x 2,05 m², à partir de deux feuilles de verre, épaisses chacune de 5 mm, en verre flotté trempé, et d'une couche intermédiaire de 6 mm d'épaisseur de polysilicate de K et de Li ayant un rapport K:Li de 8,5:1,5 et un rapport molaire SiO₂:(K₂O + Li₂O) de 5:1 comme dans l'exemple 1, mais avec un primaire à base d'acide gras.

Avant l'assemblage des feuilles de verre, la surface de chacune des deux feuilles de verre tournée vers l'intérieur est traitée avec une solution d'acide stéarique dans l'isopropanol, à une concentration choisie entre 0,1 et 2 % en poids, dans le cas présent 1,5 %. La solution est appliquée par enduction au moyen de rouleaux en caoutchouc.

Soumis à un test de tenue au feu, correspondant aux normes DIN 4102 ou ISO/DIS 834-1, le vitrage anti-feu ainsi fabriqué manifeste une résistance supérieure à 30 min., grâce à un effet de délamination des fragments de verre de la feuille exposée au feu.

### EXEMPLE 3 SELON L'INVENTION

On fabrique un vitrage anti-feu ayant les dimensions de surface 1,24 x 2,05 m², à partir de deux feuilles de verre, épaisses chacune de 5 mm, en verre flotté trempé, et d'une couche intermédiaire de 6 mm d'épaisseur de polysilicate de K et de Li ayant un rapport K:Li de 8,5:1,5 et un rapport molaire SiO₂:(K₂O + Li₂O) de 5:1 comme dans l'exemple 1, à deux différences près :
- on utilise un primaire à base de cire ;
- pour fabriquer le polysilicate, le mélange d'acide silicique et des oxydes alcalins est durci entre les deux feuilles de verre à une température supérieure à 80°C (typiquement de l'ordre de 80 à 90°C).

Avant l'assemblage des feuilles de verre, la surface de chacune des deux feuilles de verre tournée vers l'intérieur est dotée d'une couche de cire de paraffine en C₂₄-C₂₈. La cire est déposée sur la feuille de verre par chiffonage manuel sur la feuille de verre légèrement chauffée pour faciliter la dépose de la cire.

Soumis à un test de tenue au feu, correspondant aux normes DIN 4102 ou ISO/DIS 834-1, le vitrage anti-feu ainsi fabriqué manifeste une résistance supérieure à 30 min., grâce à un effet de délamination des fragments de verre de la feuille exposée au feu.

### EXEMPLE 4 SELON L'INVENTION

On fabrique un vitrage anti-feu ayant les dimensions de surface 1,24 x 2,05 m², à partir de deux feuilles de verre, épaisses chacune de 5 mm, en verre flotté trempé, et d'une couche intermédiaire de 6 mm d'épaisseur de polysilicate de K et de Li ayant un rapport K:Li de 8,5:1,5 et un rapport molaire SiO₂:(K₂O+Li₂O) de 5:1 durci à température ambiante comme dans l'exemple 1, ou à chaud comme dans l'exemple 3, mais avec un primaire à base de laque.

Avant l'assemblage des feuilles de verre, la surface de chacune des deux feuilles de verre tournée vers l'intérieur est enduite d'une couche de laque.

La laque est appliquée par pulvérisation d'une composition comprenant :
- 100 parties en poids d'une dispersion d'acrylate pur de poids moléculaire de 120.000 g/mol,
- 0,2 parties en poids d'un additif anti-coalescence,
- 0,5 parties en poids d'un additif de mouillage et nivelant à base d'un polydiméthylsiloxane modifié, et
- 0,2 parties d'un agent anti-mousse constitué d'une combinaison de polymères tensioactifs.

Les propriétés rhéologiques désirées ont été atteintes en diluant la laque avec de l'eau desionisée jusqu'à l'obtention d'une viscosité optimale en vue de la technique de pulvérisation. Une dilution par 20% d'eau est en général convenable.

L'épaisseur de la couche de laque sèche après évaporation de la phase aqueuse et durcissement à environ 60 °C pendant environ 10 minutes était de 50 µm.

Lorsqu'on soumet le vitrage anti-feu ainsi fabriqué à un test de tenue au feu, correspondant aux normes DIN 4102 ou ISO/DIS 834-1, la feuille de verre exposée au feu se détache complètement de la masse anti-feu après 3 minutes sans qu'il reste un seul résidu de polysilicate sur le verre.

## Revendications

1. Vitrage anti-feu, comportant au moins deux feuilles de verre, entre lesquelles est disposée une couche anti-feu transparente faite d'un polysilicate alcalin hydraté durci, ayant un rapport SiO₂:M₂O d'au moins 3:1 (où M désigne au moins un métal alcalin) et une teneur en eau de 25 à 60% en poids, et dans lequel au moins une feuille de verre est pourvue, sur sa surface qui est en contact avec la couche de polysilicate, d'une couche de primaire influençant l'adhérence, **caractérisé en ce que** ladite au moins une surface de verre qui est en contact avec la couche de polysilicate est pourvue d'une couche de primaire dont l'adhérence à la couche anti-feu diminue aux températures de l'essai de tenue au feu et **en ce que** la couche de primaire est formée d'une matière hydrophobe comprenant au moins un silane organofonctionnel ou au moins un acide gras ou dérivé d'acide gras, ou d'une matière dont le point de ramollissement est inférieur ou égal à ladite température de l'essai de tenue au feu, de l'ordre de 60 à 120°C.

2. Vitrage anti-feu suivant la revendication 1, **caractérisé en ce que** le silane est choisi dans le groupe des silanes suivants :
les fluoroalcoylsilanes, les perfluoroalcoylsilanes, les fluoroalcoyltrichlorosilanes, les perfluoroalcoyltrichlorosilanes, les fluoroalcoylalcoxysilanes, les perfluoroalcoylalcoxysilanes, les éthers silyliques fluoroaliphatiques, les alcoylsilanes et phénylsilanes comme un alcoyltriméthoxysilane, un alcoyltriéthoxy-silane, un alcoyltrichlorosilane, un trialcoxyphényl-sifane, les silicones comme les polydiméthylsiloxanes, les polydiméthylsiloxanes terminés par des éthoxyles et les polydiméthylsiloxanes terminés par des méthoxyles.

3. Vitrage anti-feu suivant la revendication 1, **caractérisé en ce que** la couche de primaire est formée d'une matière dont le point de ramollissement est supérieur ou égal à 90 °C.

4. Vitrage anti-feu suivant la revendication 1 ou 3, **caractérisé en ce que** la couche de primaire est formée d'une laque à base de thermoplastique, comme une laque acrylique.

5. Vitrage anti-feu suivant la revendication 4, **caractérisé en ce que** la couche de primaire est formée à partir d'une laque renfermant des particules organiques en dispersion de taille de l'ordre de 0,01 µm à 5 µm.

6. Vitrage anti-feu suivant la revendication 4 ou 5, **caractérisé en ce que** la couche de primaire est formée à partir d'une laque renfermant des particules organiques ayant une température de formation de pellicule (MFT) de l'ordre de 0 à 25 °C.

7. Vitrage anti-fieu suivant la revendication 1 ou 3, **caractérisé en ce que** la couche de primaire est formée d'une cire.

## Claims

1. Fire-resistant glazing panel comprising at least two glass sheets, between which is placed a transparent fire-resistant layer made of a cured alkali metal polysilicate hydrate having an SiO₂:M₂O ratio of at least 3:1 (where M denotes at least one alkali metal) and a water content of 25 to 60% by weight, in which glazing panel at least one glass sheet is provided, on its surface which is in contact with the polysilicate layer, with a layer of primer which has an influence on the adhesion, **characterized in that** the said at least one glass surface which is in contact with the polysilicate layer is provided with a primer layer, the adhesion of which to the fire-resistant layer decreases at the temperatures of the test of behaviour towards fire and **in that** the primer layer is formed of a hydrophobic substance comprising at least one organofunctional silane or at least one fatty acid or fatty acid derivative, or of a substance for which the softening point is less than or equal to the said temperature of the test of behaviour towards fire, of the order of 60 to 120°C.

2. Fire-resistant glazing panel according to Claim 1, **characterized in that** the silane is chosen from the group of following silanes:
fluoroalkylsilanes, perfluoroalkylsilanes, fluoroalkyltrichlorosilanes, perfluoroalkyltrichlorosilanes, fluoroalkylalkoxysilanes, perfluoroalkylalkoxysilanes, fluoroaliphatic silyl ethers, alkylsilanes and phenylsilanes, such as an alkyltrimethoxysilane, an alkyltriethoxysilane, an alkyltrichlorosilane or a trialkoxyphenylsilane, and silicones, such as polydimethylsiloxanes, polydimethylsiloxanes terminated by ethoxyls and polydimethylsiloxanes terminated by methoxyls.

3. Fire-resistant glazing panel according to Claim 1, **characterized in that** the primer layer is formed of a substance for which the softening point is greater than or equal to 90°C.

4. Fire-resistant glazing panel according to Claim 1 or 3, **characterized in that** the primer layer is formed of a thermoplastic-based lacquer, such as an acrylic lacquer.

5. Fire-resistant glazing panel according to Claim 4, **characterized in that** the primer layer is formed from a lacquer comprising dispersed organic particles with a size of the order of 0.01 µm to 5 µm.

6. Fire-resistant glazing panel according to Claim 4 or 5, **characterized in that** the primer layer is formed from a lacquer comprising organic particles having a film formation temperature (MFT) of the order of 0 to 25°C.

7. Fire-resistant glazing panel according to Claim 1 or 3, **characterized in that** the primer layer is formed of a wax.

## Patentansprüche

1. Brandschutzglas, das mindestens zwei Glasscheiben umfasst, zwischen welchen eine transparente feuerwiderstandsfähige Schicht, die aus einem ausgehärteten, hydratisierten alkalischen Polysilicat mit einem SiO₂:M₂O-Verhältnis (wobei M mindestens ein Alkalimetall bedeutet) von wenigstens 3 : 1 und einem Wassergehalt von 25 bis 60 Gew.-% hergestellt ist, angeordnet ist, und in welchem mindestens eine Glasscheibe auf der Fläche, die sich mit der Polysilicatschicht in Berührung befindet, mit einer die Haftung beeinflussenden Primerschicht versehen ist, **dadurch gekennzeichnet, dass** diese mindestens eine Glasfläche, die sich mit der Polysilicatschicht in Berührung befindet, mit einer Primerschicht versehen ist, deren Haftung an der feuerwiderstandsfähigen Schicht sich bei den Temperaturen der Feuerwiderstandsprüfung verringert, und dass die Primerschicht aus einem hydrophoben Material gebildet ist, das mindestens ein organofunktionelles Silan, mindestens eine Fettsäure bzw. ein Fettsäurederivat oder einen Stoff umfasst, dessen Erweichungspunkt von etwa 60 bis 120 °C niedriger als oder gleich der Temperatur der Feuerwiderstandsprüfung ist.

2. Brandschutzglas nach Anspruch 1, **dadurch gekennzeichnet, dass** das Silan aus der Gruppe der folgenden Silane ausgewählt ist: Fluoralkylsilane, Perfluoralkylsilane, Fluoralkyltrichlorsilane, Perfluoralkyltrichlorsilane, Fluoralkylalkoxysilane, Perfluoralkylalkoxysilane, fluoraliphatische Silylether, Alkylsilane und Phenylsilane wie ein Alkyltrimethoxysilan, ein Alkyltriethoxysilan, ein Alkyltrichlorsilan, ein Trialkoxyphenylsilan, Silicone wie Polydimethylsiloxane, Polydimethylsiloxane mit endständigen Ethoxylgruppen und Polydimethylsiloxane mit endständigen Methoxylgruppen.

3. Brandschutzglas nach Anspruch 1, **dadurch gekennzeichnet, dass** die Primerschicht aus einem Material gebildet ist, dessen Erweichungspunkt mehr als oder gleich 90 °C beträgt.

4. Brandschutzglas nach Anspruch 1 oder 3, **dadurch gekennzeichnet, dass** die Primerschicht aus einem Lack auf der Basis eines Thermoplasts wie eines Akryllacks gebildet ist.

5. Brandschutzglas nach Anspruch 4, **dadurch gekennzeichnet, dass** die Primerschicht aus einem Lack gebildet ist, der dispergierte organische Teilchen mit einer Größe von etwa 0,01 bis 5 µm enthält.

6. Brandschutzglas nach Anspruch 4 oder 5, **dadurch gekennzeichnet, dass** die Primerschicht aus einem Lack, der organische Teilchen enthält, mit einer Schichtbildungstemperatur von etwa 0 bis 25 °C gebildet ist.

7. Brandschutzglas nach Anspruch 1 oder 3, **dadurch gekennzeichnet, dass** die Primerschicht aus einem Wachs gebildet ist.
